# EUROPEAN PATENT APPLICATION

(11) **EP 2 169 565 A1**
(43) Date of publication of application: **31.03.2010**
(21) Application number: 08253176.5
(22) Date of filing: 30.09.2008
(51) Int. Cl.: G06F 17/30

(54) **Data searching**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

An apparatus and a method for identifying data subtypes within data structures. The segmentation into a number of data subtypes enables SQL queries, or other types of query, to be made based on the data subtypes. This enhances the quality of the queries.

## Description

The present invention relates to an apparatus and a method of searching data, and in particular to searching data to identify a data sub-type.

It is common for database users to have to manually examine and analyze the contents of raw column data entries in order to determine the nature and properties of the data sets. The column names can be useful when guessing the kind of values each column contains, however, more often than not the column names are so over-abbreviated or arbitrarily named that they don't contribute to a better understanding of the data semantics. Metadata, such as a comment tagged to each column, can be useful when attempting to acquire an overview of the contents. This, however, requires significant efforts to discover and append meaningful metadata information to the database, regardless of whether it is done manually or automatically.

With the exception of the 'date' type, most of the database data types don't carry any semantic information regarding the values they represent. For example, if a column is in the 'date' type, then it is safe to assume that its content will conform to a predefined date format and that the column contains some sort of date values. In contrast to this, if the type of the column is a string, then there is no way to figure out the semantics of the column without looking at the string values or making a guess based on the name of the column name, which is not always reliable.

Commonly, a value in a column is composed by its sub-values. For example, a column called 'customer_address' could have a value '1234 Rosy Road, Ipswich, Suffolk, IP5 3RE, U.K.' which can be segmented into the house number, the road name, the city name, the country name, the postcode, and the country name. The ability to make queries on the database over these sub-values would enable a user to access in-depth information. Without restructuring the whole database (e.g. converting the database into an object-oriented database after somehow segmenting each value), these sub-values remain implicit and entirely inaccessible to the conventional database query languages (e.g. SQL).

According to a first aspect of the present invention there is provided a method of processing data, the method comprising the steps of: a) comparing a data resource with a data type table, the data type table comprising a plurality of data subtypes arranged in a hierarchical structure; and b) associating the data resource with one or more data subtypes.

Metadata may be associated with each of the data subtypes. The association of the data resource with one or more data subtypes may be made in accordance with the metadata associated with the one or more data subtypes. The metadata may comprise one or more semantic conditions that define the values of the data resource which associated with one or more data subtypes in step b). The metadata may also comprise one or more data subtypes which are found in a lower hierarchical level of the data type table than the one or more data subtypes identified in step b). The metadata may also comprise one or more examples of the values commonly found in the data resource which associated with one or more data subtypes in step b). The data resource may comprise a column from a database.

According to a first aspect of the present invention there is provided a computer programme product comprising computer executable code for performing a method according to a method as described above.

Embodiments of the present invention will now be described, by way of example only, with reference to the accompanying drawings in which:
Figure 1 shows a schematic depiction of an apparatus according to the present invention; and
Figure 2 shows a schematic depiction of an application which can execute a method according to the present invention.

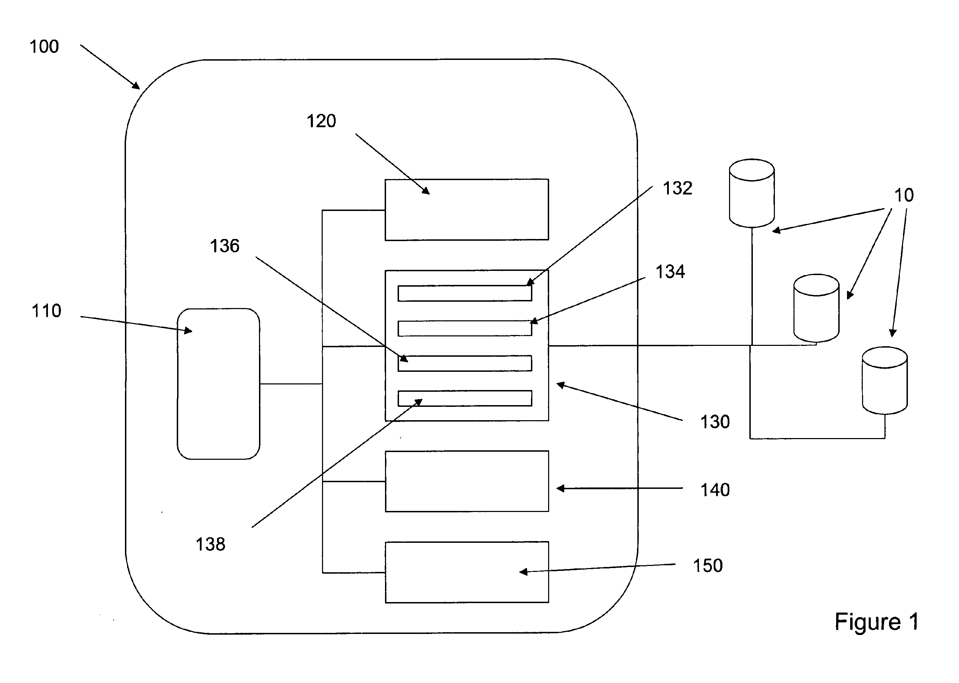

Figure 1 shows a schematic depiction of an apparatus 100 according to the present invention which comprises a central processing unit (CPU) 110, volatile computer memory storage 120, non-volatile computer storage means 130, display screen 140 and user input means 150. The non-volatile computer storage means 130 comprise operating system 132, user data 134, one or more computer applications 136 and one or more deep data type tables 138. It will be readily apparent that apparatus 100 may comprises an appropriately modified general purpose computing device: the volatile computer memory storage may comprise some form of RAM, the non-volatile computer storage means may comprise one or more of ROM, hard drives (whether fixed or removable), optical disks or flash memory such as a USB key drive. The user input means may comprise a mouse and keyboard or other known alternatives. The user input means and the display screen may be partially integrated through the use of a touch screen. In operation the components comprising the apparatus are interconnected such that the CPU executes the code that forms that operating system and selected computer applications; this data is transferred to the volatile computer memory storage from the non-volatile computer storage means whilst it is being executed. These aspects of the present invention are conventional and thus will not be described in any further detail as the skilled person will be aware of the very great number of different variations that are possible.

The apparatus is connected to one or more databases 10 via a communications interface. The databases may be connected to the same LAN as the apparatus or a communication session may be established across a WAN, such as an intranet or the Internet. Some form of security, such as encryption, may be applied to the contents of the database as they are transmitted between the apparatus and the databases.

One of the applications 136 held within the apparatus is an apparatus for segmenting the contents of the fields of the databases 10. Once the different sub-types have been identified then it is possible for a database user to include them when making database queries.

Each of the deep type data type tables comprises one or more deep data types (DDTs). The main requirement for a DDT is that it should be expressive enough to handle various value formats while specific enough to capture the semantic properties of the values it represents. This seemingly self-contradictory requirement can be achieved by a combination of regular expressions with domain-specific terms and constraints. The former is well known and widely used for its flexibility in expressing string patterns whereas the latter defines typifying semantic instances and properties in an elegant manner. These representations enable an apparatus according to the present invention to capture the way domain experts analyze and understand column values in databases.

A DDT should uniquely capture the syntactic format as well as the semantic constraints of a set of values under a specific domain. DDT may comprise the following attributes;
- **ID:** a unique ID of the data type (e.g. fullname)
- **Description:** human-readable comment or examples of the data type (e.g. "the first name such as John, Tom, etc.")
- **Names:** the variations of the names used for the deep data type (e.g. last name, sir name, family name for the lastname DDT)
- **Regular expression:** an extended version of a formal regular expression that represents the syntactic format of the values.
- **Common examples:** stereotypic instances of the data type values (e.g. O'Neil for lastname type). This attribute retains the domain knowledge of the deep data type and expressed in regular expression.
- **Semantic condition:** specific conditions that define the semantics of the values.

The terms used for the name attribute should be proper dictionary terms, whereas the ID attribute may be any arbitrary variable name as long as it is unique among other DDT IDs. The name attribute may be compared with database column names during the deep data type discovery phase and in handling user queries when searching on data segments (see further below).

In the regular expression attribute, regular expressions can be embedded into another regular expression as references to other deep data types. Thus it is possible to construct a complex DDT which comprises a number of sub-DDTs: a DDT which does not comprise any references to further DDTs may be described as a simple DDT.

The common examples attribute is the domain-specific knowledge of DDT and specifies the common instances of the data type. These representative terms are so common that when a domain expert spots them, they are most likely to identify the type of the values (for example, 'Microsoft' as a company name). The semantic condition attribute specifies the conditions on the values that are impossible or too complicated to be specified using regular expression: for example, the range of numeric values (age being a positive integer), lengths of strings (country name being shorter than 200 character length), the presence of duplicated values or excluded values, the maximum/minimum/average value, and whether all the values have a constant length are some of the examples that specify the semantics of deep data type. Extensive string and numerical comparison, counting or evaluation functions may be defined for semantic checking.

It will be understood that the composition of a DDT may be altered, with further attributes replacing or adding to those given above, or less complex DDTs may be defined comprising fewer attributes.

Table 1 below shows an exemplary DDT for last names commonly found in English speaking nations.

**Table 1: Exemplary DDT for common last names**

| **ID:** | lastname |
|---|---|
| **Description:** | Smith, O'Bryan, Johnson, etc. |
| **Names:** | last name, surname, family name |
| **Regular expression:** | ([a-zA-Z]\|\')+ |
| **Common examples:** | ((?i)(O'\|Mc\|Mac)[a-z]+\|[a-z]+ (son\|s\|ez\|er\|man)\|Smith\|Brown\|Roberts\|Wright\|White\|Green\|Hall) |
| **Semantic condition:** | maxLength() < 10 && !fixedLength() && each_Count(') < 2 |

The regular expression attribute of the lastname data type represents a non-empty set of alphabetic letters and apostrophes. This is rather broad and encompassing, easily including some values which are not related to people's last names.

The common examples and semantic condition attributes are used to filter out irrelevant values. The common examples attribute specifies some of the common last names in a regular expression which states that the last names usually begin with O', Mc or Mac, and end with son, s, ez, er, or man. Several other common last names are also listed which don't belong to any of the aforementioned string patterns. It should be noted that the regular expression '(?i)' indicates that the values are case-insensitive. This is to cover the database values that may be stored in various cases, for example in lower case, in upper case, or in a mix of cases.

It should be understood that the common examples attribute doesn't have to specify an exhaustive set of instances as long as a good number of representative and frequent values are included. The semantic condition attribute specifies that not all the last names have the same length, and each value should be shorter than 10 character length and there shouldn't be more than one apostrophe in each value. These conditions would exclude certain valid last names, which is acceptable as long as they include most of the common ones. It will be readily understood that these attribute values may be altered if they increase the probability of correctly identifying a valid last name, as long as this advantage outweighs the increased possibility of incorrectly identifying another term as a last name.

An example of a partial DDT tree, which is a hierarchy of DDTs, is shown below in Appendix A. It should be noted that detailed categories and subcategories can be explicitly defined (for example U.S. zip codes and U.K. postcodes). It should also be understood that these hierarchical and descriptive data types do not relate to just one specific database. Instead, they are generic, highly reusable, and can be extended as required. For example, the full_address DDT can be used with any databases that contain columns containing address values.

A complex DDT can refer to the lastname DDT, for example, as its subtype. For instance, the regular expression attribute for the fullname DDT can be specified as
'(%title%\s)?%firstname%\s(%middlename%\s)?%lastname%'.

This is an example of regular-expression reference in which the regular expression fullname is composed by other DDTs such as title, firstname, middlename, and lastname. These embedded references correspond to the implicit subtypes. For example, if the column values conform to the fullname DDT, then these values are expected to contain strings in the format of "[title] firstname [middlename] lastname" (in this simplified regular expression representation, the square bracket denotes that the subtype is optional).

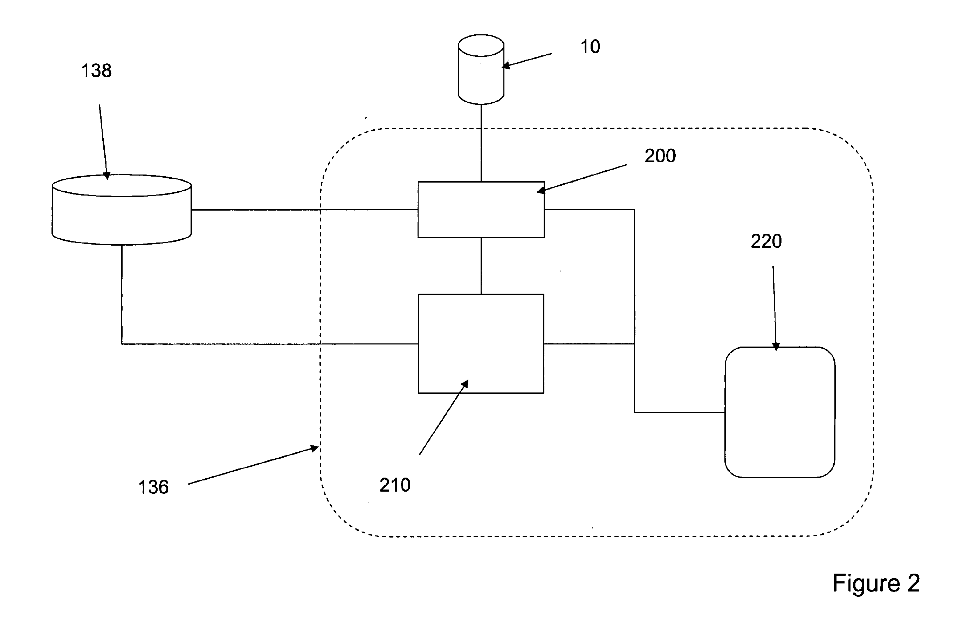

Figure 2 shows a schematic depiction of an application 136 which can execute a method according to the present invention by which a database column can be analysed to determine which DDT (or DDTs) is contained within the column. Figure 2 shows that the application 136 is in communication with one or more databases 10 (for the sake of clarity only one of the databases is shown in Figure 2) and with one or more deep data type tables 138 (again, for the sake of clarity only one is shown). The application 136 comprises a conceptual model converter 200, a data analyser 210 and a natural language interface 220.

The conceptual model converter 200 takes the raw data from the database and transforms it such that the data is represented as a conceptual model. A conceptual model standardizes the terms and thus simplifies the name-resolution process, and reduces the complexity typically caused by the arbitrary naming (e.g. 'customer' instead of 'custmr', 'product name' instead of 'pname', etc.) of database columns. It should be understood that the data source need not be a database but it could be a structured, semi-structured or unstructured data source such as XML file, free textual document, etc. as long as it can be represented using a conceptual model. An ontology is one example of such a conceptual model representations; the database table names are mapped to ontology concepts whereas the field names are mapped to ontology attributes. By using a conceptual model instead of using database namespace directly, it is possible to benefit not only from regular vocabulary but also from extra meta information (e.g. comments, hierarchy information, constraints, etc.).

The data analyser 210 maps each conceptual model attribute (CMA) to its corresponding DDT in a DDT tree, as a CMA semantically represents a set of actual data source values. The data analyser 210 finds a list of candidate DDTs whose regular expressions satisfy most of the contents of the given CMA (e.g. more than 70%). For example, the 'name' column can contain string values that match the regular expression attributes of the DDTs like human_name as well as country_name, street_name, etc. Although regular expression is very expressive and effective in filtering out the DDTs with obviously discrepant patterns (e.g. the DDTs related to price and date against the values of the column 'name'), it is rather weak in specifying comprehensive semantic information. For example, regular expression by itself cannot express the average of a set of numbers. For this reason, other attributes of DDT are used to further the filtering.

The semantic condition attribute compensates this limitation of regular expression by its rich conditional functions that specify semantic constrains over each value as well as the values as a whole. Using complex conditional statements (using OR, AND, NOT, and parenthesis), the semantic attribute can also specify the properties of the given type as detailed as required. For example, using this attribute, you can set the maximum age for the life insurance customers as 70. When this attribute is compared with the column values, the system accepts the match if the most of the values conform to the constraints. This prevents the system from discarding otherwise a proper match just because of a small number of outliers.

Another evidence that is used in the matching evaluation is the common examples attribute. These are the common instances of the deep data type. For instance, if the word O'Bryan is found in the value, there is a good chance that the value has something to do with people's name. These domain-specific instances are often a major deciding factor when a domain expert looks at a set of values to figure out its type. The more the column values contain these instances of a DDT, the more likely the column matches the DDT. If a DDT has its sub-DDTs then the matching common examples of the sub-DDTs also contributes to the evaluation value. Note that all these three types of DDT attributes (regular expression, semantic condition, and common examples) may be used for the evaluation in a flexible manner in case there are a small number of exceptional cases or wrong values among a dominating number of proper values. This is important especially when the database hasn't been cleaned or the DDT type itself is too complicated to explicitly specify every property and constraint.

If the column is informatively named, its name can provide a clue on what its content is about. More often than not, however, column names are so severely abbreviated or arbitrarily titled that even humans cannot tell their originally intended names. A phonetic algorithm like SoundEx along with string comparison algorithms can be used to compare the column name with the name attribute of DDT. The table name of the column and the name attribute of the parent DDT may also used in this comparison, whenever applicable. The name attribute, along with the common examples attribute, when present, can contribute more weight to the final evaluation figure than other attributes because they bear more relevance to the data type of the column than others.

A method according to the present invention can now be explained with reference to a specific example based on the column called 'name' from a database table called 'RetailCustomer'. This column contains people's names as shown below in Table 1.

**Table 1: Exemplary data**

| **RetailCustomer.name** |
|---|
| John Doe |
| Dr. Mike Smith |
| Susan Love O'Bright |
| Sam Bryan |
| Ms. Mary Jane Margaret |
| Nick Wilkinson |

Although it is easy to tell from a simple inspection which sub-values correspond to the title, the first name, the middle name, and the last name in each value, this information is too implicit to access using SQL. Suppose that the regular expression attributes of the fullname and street DDTs equally matched all of the values. Nevertheless, the sub-DDTs (title, firstname, and lastname) referenced by the fullname DDT have numerous matching common examples. Also the column name 'name' partially matches the name attribute ('full name') of the fullname DDT. After weighing all these relevant evidences, the fullname DDT is correctly chosen over the street DDT as the deep data type for the RetailCustomer.name column.

If the deep data type contains sub-DDTs, then the values of the corresponding column can be segmented into sub-values, as each sub-DDT has its own regular expression attribute. For example, the regular expression attribute of the fullname DDT is '(%title%\s)?%firstname%\s(%middlename%\s)?%lastname%'. In turn, the regular expression of the lastname DDT is '([a-zA-Z]|\')+', the regular expression of the middlename DDT is '([a-zA-Z])+', and so forth.

The references of the sub-DDTs can be replaced by its regular expressions to segment each value into its corresponding sub-values. The column values from Table 1 can be segmented into the values in Table 2 using pattern matching of regular expression attributes. This regular expression pattern matching is well defined and supported by most of the high-level programming languages.

**Table 2: Segmented data**

| **RetailCustomer.name** | | | |
|---|---|---|---|
| **title** | **firstname** | **middlename** | **lastname** |
| | John | | Doe |
| Dr. | Mike | | Smith |
| | Susan | Love | O'Bright |
| | Sam | | Bryan |
| Ms. | Mary | Jane | Margaret |
| | Nick | | Wilkinson |

Once the values are segmented into their sub-values, the query over these sub-values is straightforward. These in-depth values are now explicit and fully visible, enabling deep queries. For example, given the segmented values in Table 2, the user can make query about the title, first name, middle name, and last name in any combinations and with various conditions.

Referring to Figure 2 a natural language interface 220 is provided such that a user can extract information from segmented data providing by the application of DDTs without requiring knowledge of SQL. For example, the deep SQL statement for the natural language query "get me the last names of the customers whose first names begin with M" is "SELECT RetailCustomer.name->lastname WHERE RetailCustomer.name>firstname LIKE 'M%'" where the symbol '->' indicates subtype referencing. Note that the original database structure (e.g. RetailCustomer.name) is left intact by the operation of the present invention and preferably the information of sub-values and sub-types is added onto the existing database construction.

The utilization of natural language processing provides expressiveness along with flexibility in terms of phrasing query statements. Instead of forcing the user to use the exact CMA terms, the natural language interface evaluates the similarity between the user's terms and the CMA terms to resolve user terms. For example, given the query statement "get me the customer names", the natural language interface checks if there are any exact or partial matches between CMA terms (e.g. RetailCustomer.name) and the user input terms (e.g. "customer names"). The parent and the ancestor concepts (e.g. Parties and Customer for RetailCustomer) of the CMA term can also be included and considered in the matching process. Additionally, or as an alternative, all of the combinations (e.g. party name, retail customer name, retail name, customer name, name) of the terms can be compared. It should be noted that the terms are normalized in the comparison process after taking into consideration of the cases (RetailCustomer → retail customer), symbols (Product_Name → product name), and plurality (Parties → party). In this term resolution process, the subtypes (e.g. first name, middle name, and last name) discovered during deep data analysis are also considered as the candidates for comparison. A general discussion of natural language database interfaces can be found in AM Popescu et al "Modern natural language interfaces to databases: Composing statistical parsing with semantictractability", Proc. of Int. Conf. on Computational Linguistics (COLING04), Geneva, Switzerland, 2004.

If the natural language interface were to receive the query:
"what are the first names of the customers who are older than 30?"
then the English phrase "the first name of the customers" is resolved into the CMA term RetailCustomer.name→firstname where firstname is a subtype of name. Then, it translates the natural language query statement into a query statement (which supports subtypes) "SELECT name→firstname FROM RetailCustomer where age > 30". The interface is able to distinguish between the concept (RetailCustomer), the attribute (name), and the subtype name (firstname).

What are the **first names** of the **customers** who are **older** than 30?
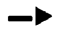 SELECT name-**>firstname** FROM **RetailCustomer** where **age** > 30

Note that the term 'age' and the operator '>' were inferred from the word 'older' during the natural language processing. This is another implicit term resolution feature supported by the natural language interface. When the query statement is executed, the regular expression of each subtype is applied to the CMA value (RetailCustomer.name) to retrieve the corresponding substring value (firstname). Table 3 below illustrates the results of applying such a query to retrieve the requested subtype.

**Table 3. Regular expression application on subtype**

| **NAME** | | **firstname** |
|---|---|---|
| **John** Doe | | John |
| Dr. **Mike** Smith | [title] **firstname** [middlename] lastname | Mike |
| **Susan** Love O'Bright | | Susan |
| **Sam** Bryan | | Sam |
| Ms. **Mary** Jane Margaret | | Mary |
| **Nick** Wilkinson | | Nick |

If there are ambiguities or more than one valid match, the natural language interface may ask for the user's input to clarify the query or to select one of the valid matches. It is just natural to have this interactive dialogue between the system and the user when the natural language interface is utilized.

One column of a database doesn't have to be restricted to have only one corresponding DDT. Depending on the data values, there can be more than one valid DDT that matches the values. For example, if a column called 'address' contains the addresses of customers from different countries, then it is highly likely that these addresses will be in several distinctive clusters of formats. The DDTs under the same parent node in the DDT tree will belong to the same cluster type. For instance, the DDTs under the node name 'fullname' in Figure 2 form a cluster type that represents the full names in various formats. In this way, the hierarchy of the deep data types maintains the information of the groupings of similar types.

Besides the deep query, there could be further applications of deep data type discovery and the deep data segmentation. One of these applications is the extraction of domain knowledge. After the deep data segmentation, it has been noticed that certain terms occur very often in the segmented values. For example, Table 4 below shows the frequencies of the terms in the segmented addresses. These international addresses are obtained from the publicly available database called Adventure Works Business Intelligence sample database for SQL Server (SQL Server and Analysis Services 2008, http://codeplex.com/SqlServerSamples)

**Table 4: Terms from address related data types**

| **Address_prefix** | **Address_postfix** |
|---|---|
| Mt. (286) | Drive (1914) |
| San (277) | Court (1517) |
| St. (164) | Dr. (1510) |
| La (138) | Way (1094) |
| Santa (131) | Lane (702) |
| Via (118) | Ct. (688) |
| P. O. Box (14) | Street (93) |
| Level (11) | St. (37) |
| Factory (5) | St (34) |
| Parkway (2) | Avenue (16) |
| Mall (2) | Road (13) |

These newly discovered pieces of information, which is extremely valuable by itself, can be used to update and strengthen the domain knowledge of the DDTs in the DDT tree. In this way, the DDT tree can be evolved into more comprehensive data type structure at each iteration of the update.

It will be understood that the present invention can be implemented as a program or software component that will be executed by a computer. Software implementing a method according to the present invention may be supplied on physical media (such as a USB drive, CD-ROM, DVD, etc) or supplied or made available for transfer or download via a communications network.

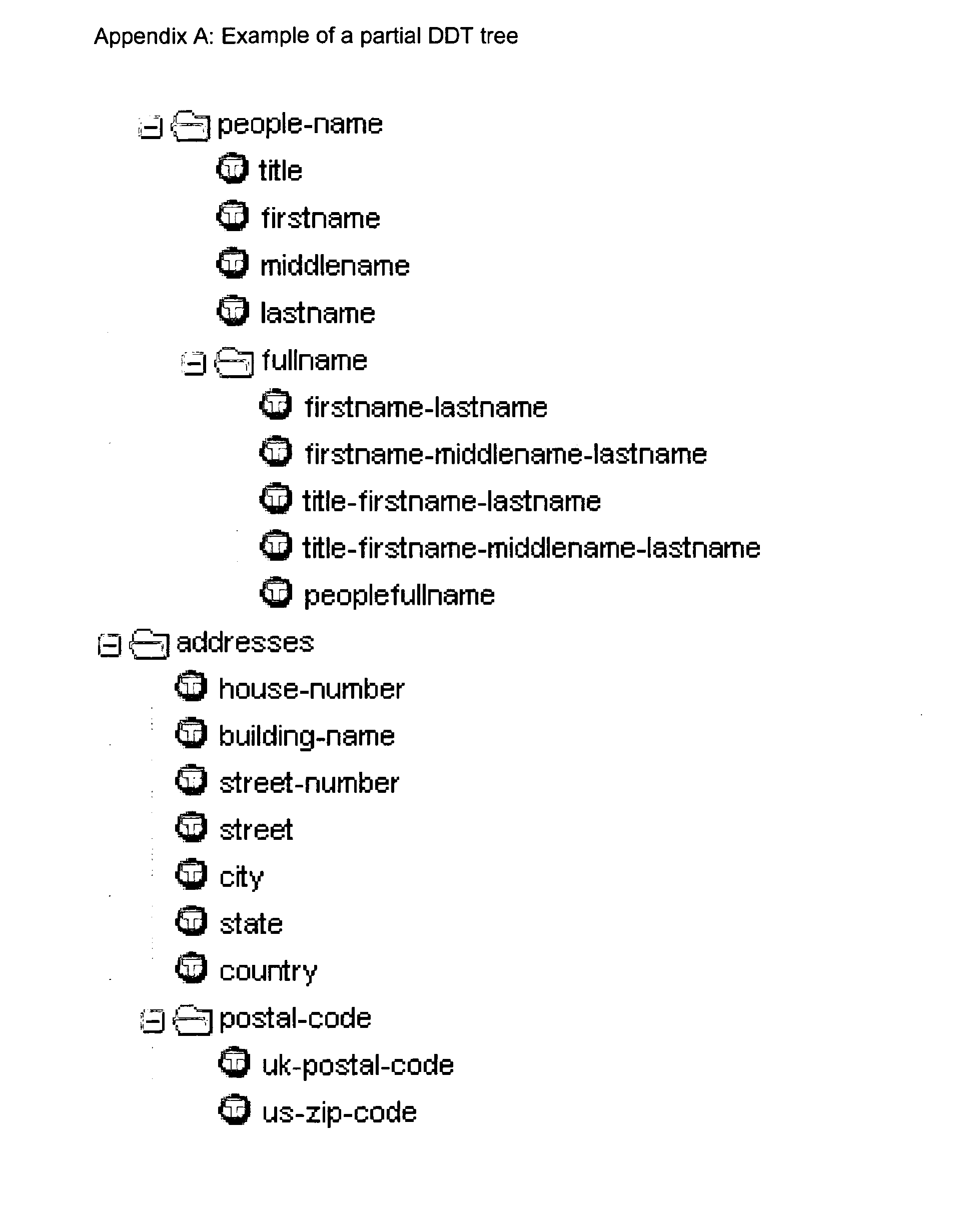

## Claims

1. A method of processing data, the method comprising the steps of:
a) comparing a data resource with a data type table, the data type table comprising a plurality of data subtypes arranged in a hierarchical structure; and
b) associating the data resource with one or more data subtypes.

2. A method according to claim 1, wherein metadata is associated with each of the data subtypes.

3. A method according to claim 2, wherein the association of the data resource with one or more data subtypes is made in accordance with the metadata associated with the one or more data subtypes.

4. A method according to claim 2, wherein the metadata comprises one or more semantic conditions that define the values of the data resource which associated with one or more data subtypes in step b).

5. A method according to claim 2, wherein the metadata comprises one or more data subtypes which are found in a lower hierarchical level of the data type table than the one or more data subtypes identified in step b).

6. A method according to claim 2, wherein the metadata comprises one or more examples of the values commonly found in the data resource which associated with one or more data subtypes in step b).

7. A method according to any preceding claim wherein the data resource comprises a column from a database.

8. A computer programme product comprising computer executable code for performing a method according to any of claims 1 to 7.
